Europäisches Patentamt

European Patent Office

Office européen des brevets

(19)

(11) Veröffentlichungsnummer: **0 258 642**
**B1**

(12) # EUROPÄISCHE PATENTSCHRIFT

(45) Veröffentlichungstag der Patentschrift:
**10.01.90**

(51) Int. Cl.⁴: **B60R 21/02**

(21) Anmeldenummer: **87111063.1**

(22) Anmeldetag: **30.07.87**

(54) Kraftfahrzeug, insbesondere Personenkraftwagen, mit offenem Aufbau und Überrollschutzbügel.

(30) Priorität: **31.07.86 DE 3625940**

(43) Veröffentlichungstag der Anmeldung:
**09.03.88 Patentblatt 88/10**

(45) Bekanntmachung des Hinweises auf die Patenterteilung:
**10.01.90 Patentblatt 90/2**

(84) Benannte Vertragsstaaten:
**DE ES FR GB IT SE**

(56) Entgegenhaltungen:
**EP-A- 0 189 819**
**AT-B- 265 039**
**DE-U- 8 406 461**
**FR-A- 2 563 173**
**GB-A- 1 162 627**
**GB-A- 2 127 360**

(73) Patentinhaber: **Bayerische Motoren Werke Aktiengesellschaft, Patentabteilung AJ-3 Postfach 40 02 40 Petuelring 130, D-8000 München 40(DE)**

(72) Erfinder: **Lagaay, Harm, Schmidschneiderstrasse 6, D-8036 Herrsching(DE)**
Erfinder: **Pregl, Alexander, Dipl.-Ing., Lauthstrasse 14, D-8000 München 50(DE)**
Erfinder: **Juenger, Dieter, Ing. grad., Welfenstrasse 8 a, D-8011 Poing(DE)**

(74) Vertreter: **Draeger, Karlfried, Bayerische Motoren Werke Aktiengesellschaft Postfach 40 02 40 Petuelring 130 - AJ 36, D-8000 München 40(DE)**

## Beschreibung

Die Erfindung betrifft ein Kraftfahrzeug, insbesondere Personenkraftwagen, nach dem Oberbegriff des Anspruchs 1.

Bei einem bekannten Kraftfahrzeug dieser Art ist ein Überrollschutzbügel hinter den bzw. den vorderen Seitentüren angeordnet (DE-A 31 27 525, DE-A 32 35 148). Diese Anordnung läßt die vordere Partie des Kraftfahrzeugs weitgehend unverstärkt.

Der Erfindung liegt in erster Linie die Aufgabe zugrunde, ein Kraftfahrzeug der eingangs genannten Art zu schaffen, dessen Aufbau im vorderen Bereich verhältnismäßig steif ausgebildet ist.

Die Lösung dieser Aufgabe ist im kennzeichnenden Teil des Anspruchs 1 angegeben. Durch sie wird mit einfachen Mitteln erreicht, daß die vorderen Karosseriepfosten (A-Säulen) an ihren oberen Enden in einer für den Kraftfluß günstigen Weise miteinander verbunden sind, so daß sich eine im vorderen Fahrzeugbereich verhältnismäßig steife Karosserie ergibt. Darüber hinaus wird erreicht, daß nach hinten weisende Ecken an den oberen Enden der Karosseriepfosten, die sich etwa in Höhe des Kopfes einer ein- oder aussteigenden Person befinden, nicht vorhanden sind, wie sie bei herkömmlichem Aufbau an dem bekannten Kraftfahrzeug gegeben sind und mit denen eine gewisse Verletzungsgefahr verbunden ist. Ferner ist bei dem erfindungsgemäßen Aufbau bei Einsatz eines Fahrzeugdaches in einfacher Weise eine einwandfreie Abdichtung der an den oberen Enden der vorderen Karosseriepfosten zusammentreffenden Teile möglich. Außerdem wird eine stilistisch ansprechende Gestaltung erzielt.

Es ist zwar bekannt, einen Überrollschutzbügel im Bereich der Frontscheibe vorzusehen (DE-U 84 06 461). Der bekannte Überrollschutzbügel ist jedoch als gesondertes Bauteil neben den vorderen Karosseriepfosten angeordnet und liegt mit seinem oberen Teil an diesen und an dem oberen Teil des Frontscheibenrahmens an, um diesen abzustützen.

Ausgestaltungen der Erfindung sind in den Unteransprüchen gekennzeichnet.

In der Zeichnung ist ein Ausführungsbeispiel der Erfindung schematisch dargestellt, und zwar zeigt

Fig. 1 die durch einen Querträger miteinander verbundenen vorderen Karosseriepfosten mit Frontscheibe eines Kraftfahrzeugs in Schrägansicht,

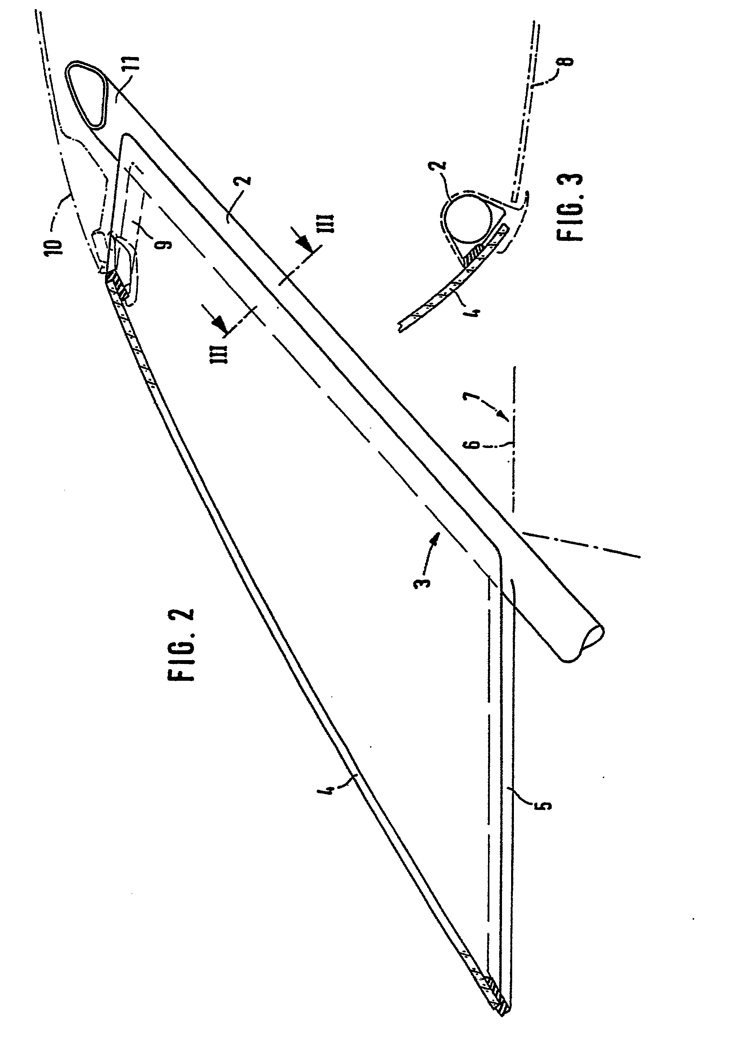

Fig. 2 einen Schnitt durch die Einrichtung nach Fig. 1 in der Fahrzeuglängsmittelebene und

Fig. 3 einen Schnitt nach der Linie III-III der Fig. 2.

Ein linker vorderer Karosseriepfosten 1 und ein rechter vorderer Karosseriepfosten 2 eines nicht weiter dargestellten sportlichen zweisitzigen Personenkraftwagens (Kabriolett) sind in üblicher Weise schräg von vorne nach hinten ansteigend geneigt angeordnet. Sie bilden Seitenteile eines Frontscheibenrahmens 3, der eine Frontscheibe 4 aufnimmt. Diese ist nach vorne gewölbt ausgebildet und verläuft in ihrem mittleren Bereich flacher als die beiden vorderen Karosseriepfosten 1, 2. Ein unterer Teil 5 des Frontscheibenrahmens 3 ruht in Höhe der Brüstung 6 der nur angedeuteten Fahrzeugseitentür 7, die eine versenkbare Fensterscheibe 8 aufweist, auf dem Fahrzeugvorbau. Der obere Teil 9 des Frontscheibenrahmens 3 spannt sich in einem nach vorne gewölbten Bogen von dem oberen Ende des linken vorderen Karosseriepfostens 1 zu dem oberen Ende des rechten vorderen Karosseriepfostens 2. Der mittlere Bereich des oberen Teils 9 des Frontscheibenrahmens 3 liegt geringfügig höher als die beiden seitlichen Bereiche dieses Rahmenteils. Dieses kann jedoch auch eine andere Neigung aufweisen oder in einer waagerecht liegenden Ebene verlaufen. Es ist verhältnismäßig klein und leicht, jedoch ausreichend stabil, um den Anforderungen zur inneren Sicherheit bei einem Frontalaufprall zu genügen, ausgebildet und bildet eine Regenrinne für ein aufsetzbares Fahrzeugdach 10 oder Faltverdeck.

Die oberen Enden der beiden vorderen Karosseriepfosten 1, 2 sind zusätzlich durch einen Querträger 11 miteinander verbunden, der in der von den beiden vorderen Karosseriepfosten 1, 2 definierten Ebene verläuft. Der Querträger 11 ist der Kontur des aufsetzbaren Fahrzeugdaches 10 oder Faltverdecks entsprechend leicht nach oben gewölbt ausgebildet, kann aber anders als bei dem dargestellten Ausführungsbeispiel auch gerade verlaufen.

Der Querträger 11 ermöglicht in erheblichem Maße einen Kraftfluß über die vorderen Karosseriepfosten 1, 2. Dies bewirkt vor allem eine hohe Steifigkeit des Fahrzeugaufbaus, und zwar insbesondere im vorderen Fahrzeugbereich, und damit eine verhältnismäßig hohe Sicherheit der Fahrzeuginsassen vor nachteiligen Unfallfolgen.

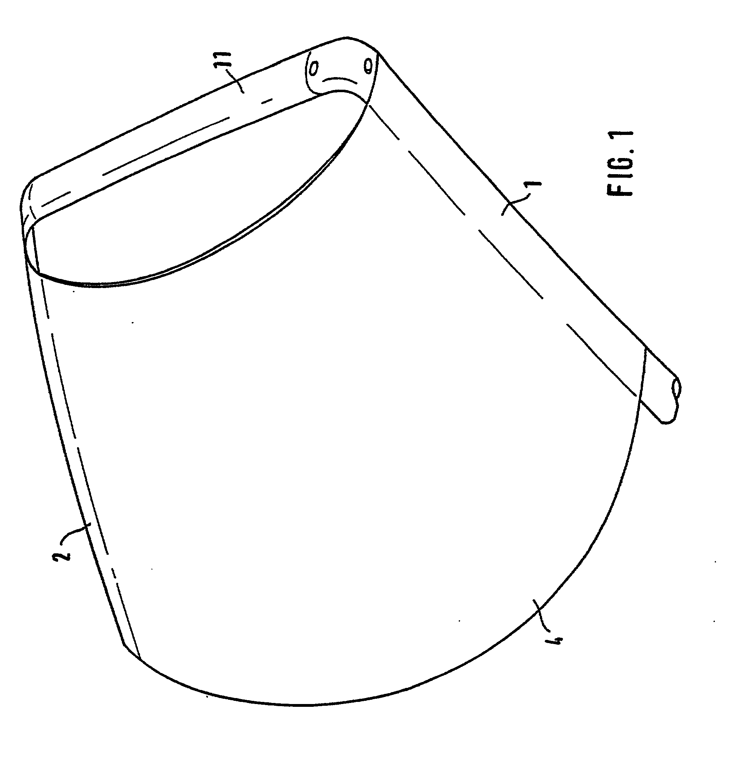

Der Querträger 11 weist zweckmäßigerweise einen Querschnitt auf, der dem der vorderen Karosseriepfosten 1, 2 entspricht. Er kann unterschiedlich ausgebildet sein, beispielsweise aus Blechprofilen, aus einem Aluminiumstrangpreßprofil oder aus Stahlrohr gebildet sein. Der Übergang von einem vorderen Karosseriepfosten 1, 2 zu dem Querträger 11 erfolgt zweckmäßigerweise gerundet, wie in Fig. 1 dargestellt, kann aber auch scharfkantig erfolgen. Selbst bei scharfkantigem Übergang ist eine nach hinten weisende Ecke nicht vorhanden, so daß das Verletzungsrisiko relativ gering ist und sich eine stilistisch ansprechende Form ergibt, die darüber hinaus einen günstig gestalteten Dichtungsverlauf ermöglicht.

Der Querträger 11 kann mit den vorderen Karosseriepfosten 1, 2 einstückig ausgebildet sein. Er kann aber auch als gesondertes Teil, z.B. durch Schweißen oder Schrauben, fest oder lösbar unmittelbar mit diesen verbunden sein. Es ist jedoch auch eine Verbindung durch Verbindungs-Eckstücke möglich, wie es in Fig. 1 gezeigt ist.

Vordere Karosseriepfosten 1, 2 und Querträger 11 bilden gemeinsam ein Hauptbauteil, an das der obere Teil 9 des Frontscheibenrahmens 3 angesetzt ist. Das obere Teil 9 des Frontscheibenrahmens 3 kann in beliebiger Weise an den vorderen Karosseriepfosten 1, 2 befestigt, beispielsweise angeschraubt oder angeschweißt, sein.

Bei dem dargestellten Ausführungsbeispiel weist der Querträger 11 einen strömungsgünstigen Querschnitt auf. Er wirkt damit bei geöffnetem Fahrzeugdach als Luftleitelement, das die über die Oberkante der Frontscheibe 4 hinwegströmende Luft weiterführt und dadurch dazu beiträgt, den Fahrzeuginnenraum weitgehend zugfrei zu halten.

Bei abgenommenem Fahrzeugdach bzw. geöffnetem Verdeck kann der Querträger 11 zudem als Haltegriff beim Ein- und Aussteigen benutzt werden.

Die Erfindung eignet sich sowohl zum Einsatz bei der serienmäßigen Herstellung von Neufahrzeugen als auch zum nachträglichen Fahrzeugumbau. Sie ist besonders bei Fahrzeugen vorteilhaft, die im hinteren Bereich keinen Überrollschutzbügel aufweisen, ist aber auch bei Fahrzeugen nützlich, die im hinteren Bereich mit einem Überrollschutzbügel versehen sind.

Bezugszeichenliste

1 Karosseriepfosten, vorderer (links)
2 Karosseriepfosten, vorderer (rechts)
3 Frontscheibenrahmen
4 Frontscheibe
5 unterer Teil des Frontscheibenrahmens
6 Brüstung
7 Fahrzeugseitentür
8 versenkbare Fensterscheibe
9 oberer Teil des Frontscheibenrahmens
10 aufsetzbares Fahrzeugdach
11 Querträger

## Patentansprüche

1. Kraftfahrzeug, insbesondere Personenkraftwagen, mit offenem Aufbau und einem eine Frontscheibe (4) aufnehmenden Frontscheibenrahmen (3), dessen Seiten jeweils von einem vorderen, schräg nach hinten ansteigenden Karosseriepfosten gebildet sind und dessen oberer Teil, der die oberen Enden der vorderen Karosseriepfosten miteinander verbindet, in einem nach vorne gewölbten Bogen verläuft,
**dadurch gekennzeichnet,**
daß die oberen Enden der vorderen Karosseriepfosten (1, 2) zusätzlich durch einen Querträger (11) miteinander verbunden sind, der zumindest annähernd in der von den vorderen Karosseriepfosten (1, 2) definierten Ebene verläuft.

2. Kraftfahrzeug nach Anspruch 1, dadurch gekennzeichnet, daß der Querträger (11) einen Querschnitt aufweist, der dem der vorderen Karosseriepfosten (1, 2) entspricht.

3. Kraftfahrzeug nach Anspruch 1 oder 2, dadurch gekennzeichnet, daß der Querträger (11) als Luftleitelement ausgebildet ist.

4. Kraftfahrzeug nach Anspruch 1, 2 oder 3, dadurch gekennzeichnet, daß der Querträger (11) als Haltegriff ausgebildet ist.

5. Kraftfahrzeug nach einem der vorhergehenden Ansprüche, dadurch gekennzeichnet, daß der Querträger (11) mit den vorderen Karosseriepfosten (1, 2) einstückig ausgebildet ist.

## Claims

1. A motor vehicle, more particularly a passenger car with an open body and a front window frame (3) receiving a front window (4), each side of the frame being formed by a front A-column sloping upwards to the rear, and the top part of the frame, which joins the top ends of the front A-columns, extending in a convex arc in front, characterised in that the top ends of the front A-columns (1, 2) are additionally connected by a transverse member (11) which extends at least approximately in the plane defined by the front A-columns (1, 2).

2. A vehicle according to claim 1, characterised in that the transverse member (11) has a cross-section corresponding to that of the front A-columns (1, 2).

3. A vehicle according to claim 1 or 2, characterised in that the transverse member (11) is constructed as a spoiler.

4. A vehicle according to claim 1, 2 or 3, characterised in that the transverse member (11) is constructed as a supporting strap.

5. A vehicle according to any of the preceding claims, characterised in that the transverse member (11) is constructed in one piece with the front A-columns (1, 2).

## Revendications

1. Véhicule à moteur, en particulier voiture particulière à carrosserie ouverte et un cadre de pare-brise (3), recevant un pare-brise (4) et dont chacun des côtés est formé par un montant de carrosserie avant, s'élevant vers l'arrière de manière inclinée, et cadre dont la partie supérieure reliant entre eux les extrémités supérieures des montants de carrosserie avant s'étendent en formant un arc courbé vers l'avant, caractérisé en ce que les extrémités supérieures des montants de carrosserie avant (1, 2) sont en plus reliées entre elles par un support transversal (11) qui s'étend au moins à peu près dans le plan défini par les montants de carrosserie avant (1, 2).

2. Véhicule à moteur selon la revendication 1, caractérisé en ce que le support transversal (11) présente une section transversale correspondant à celle des montants de carrosserie avant (1, 2).

3. Véhicule à moteur selon la revendication 1 ou 2, caractérisé en ce que le support transversal (1, 2) est réalisé sous la forme d'un élément de guidage de l'air.

4. Véhicule à moteur selon la revendication 1, 2 ou 3, caractérisé en ce que le support transversal (11) est réalisé sous la forme d'une poignée de maintien.

5. Véhicule à moteur selon l'une des revendications précédentes, caractérisé en ce que le support transversal (11) est réalisé d'une seule pièce avec les montants de carrosserie avant (1, 2).

FIG. 1

**FIG. 2**

**FIG. 3**

EP 0 258 642 B1